# EUROPEAN PATENT SPECIFICATION

(11) **EP 4 344 901 B1**
(45) Date of publication and mention of the grant of the patent: **11.06.2025**
(21) Application number: 23198803.1
(22) Date of filing: 21.09.2023
(51) Int. Cl.: B60C 7/14, B60C 19/08

(54) **AIRLESS TIRE**
LUFTLOSER REIFEN
PNEU SANS AIR

(30) Priority: 28.09.2022 JP 2022155363
(43) Date of publication of application: 03.04.2024
(73) Proprietor: Sumitomo Rubber Industries, Ltd., Kobe-shi, Hyogo-ken 651-0072 (JP)
(72) Inventor: TAKEDA, Ai, Kobe-shi, 651-0072 (JP)
(74) Representative: Manitz Finsterwald Patent- und Rechtsanwaltspartnerschaft mbB

(56) References cited:
- JP-A- 2014 125 082
- JP-A- 2017 001 602
- US-A1- 2017 355 227
- US-A1- 2020 198 413
- US-A1- 2021 086 568
- US-A1- 2022 250 419

## Description

### BACKGROUND OF THE INVENTION

### Field of the Invention

The present invention relates to an airless tire.

### Background Art

Japanese Laid-Open Patent Publication No. 2021-49977 describes a non-pneumatic tire including a fiber coated with a metal salt, the non-pneumatic tire including a rim portion which is connected to an axle, a tread portion which comes into contact with the ground, and a spoke portion which is formed between the rim portion and the tread portion. A non-pneumatic tire according to the preamble of claim 1 is known from US 2017/0355227 A1.

In recent years, it is desired for non-pneumatic tires to maintain high-speed durability while having a function of eliminating static electricity of a vehicle.

The present invention has been made in view of the above circumstances, and a main object of the present invention is to provide an airless tire that can maintain high-speed durability while having a function of eliminating static electricity of a vehicle.

### SUMMARY OF THE INVENTION

The present invention is directed to an airless tire including: an annular tread portion which comes into contact with a road surface; an annular inner circumferential portion which is disposed inward of the tread portion in a tire radial direction and comes into contact with a wheel having conductivity; and a spoke portion which connects the tread portion and the inner circumferential portion, wherein the tread portion includes a first portion having a ground-contact surface and having conductivity, and a second portion placed on the inner circumferential portion side so as to be in contact with the first portion, the second portion, the spoke portion, and the inner circumferential portion are formed from a resin or elastomer, the resin or elastomer contains an antistatic agent, the antistatic agent is a polymer-based antistatic agent or surfactant-based antistatic agent, and the antistatic agent is blended in an amount of 0.5 to 20% by mass per 100% by mass of a base component of the resin or elastomer.

As a result of employing the above configuration, the airless tire of the present invention can maintain high-speed durability while having a function of eliminating static electricity of a vehicle.

### BRIEF DESCRIPTION OF THE DRAWINGS

FIG. 1 is a side view of an airless tire of an embodiment;
FIG. 2 is a perspective view of the airless tire in FIG. 1;
FIG. 3 is an enlarged cross-sectional view of a main part in FIG. 1; and
FIG. 4 is a schematic cross-sectional view conceptually showing an electrical resistance measurement device for airless tires.

### DETAILED DESCRIPTION

Hereinafter, one embodiment of the present invention will be described with reference to the drawings.

It should be understood that the drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

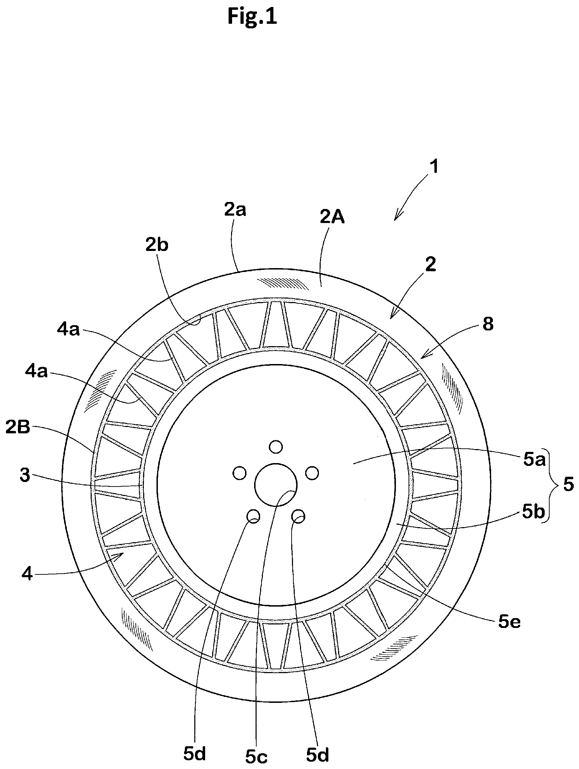

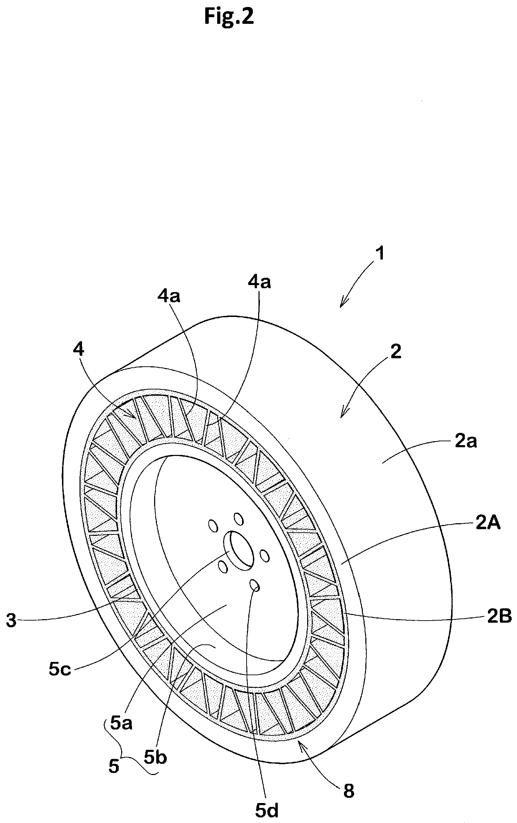

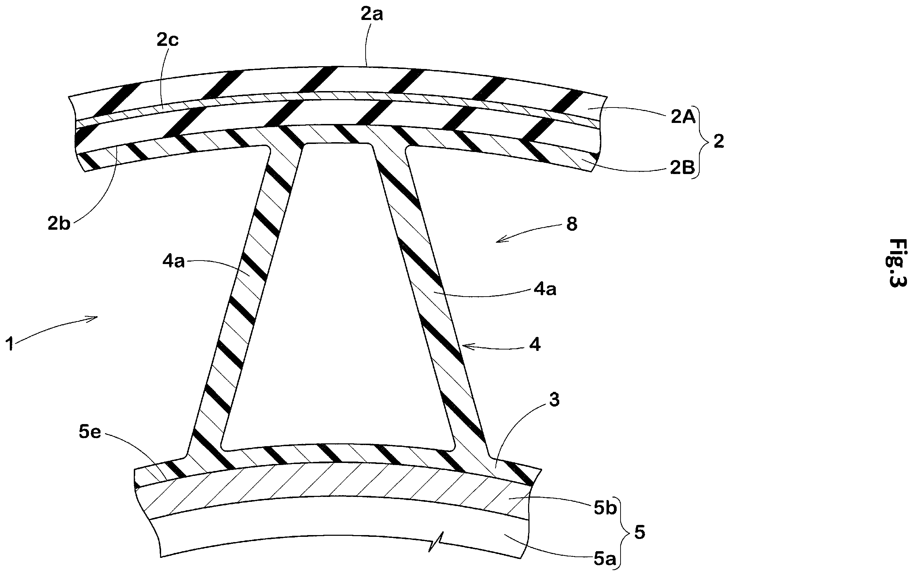

FIG. 1 is a side view of an airless tire (hereinafter, sometimes referred to simply as "tire") 1 of the present embodiment. FIG. 1 is a perspective view of the tire 1, and FIG. 3 is an enlarged cross-sectional view of a main part in FIG. 1. As shown in FIG. 1 to FIG. 3, the tire 1 includes an annular tread portion 2 which comes into contact with a road surface, an annular inner circumferential portion 3 which is placed inward of the tread portion 2 in the tire radial direction, and a spoke portion 4 which connects the tread portion 2 and the inner circumferential portion 3. The inner circumferential portion 3 is in contact with a wheel 5 having conductivity.

The tread portion 2 includes a first portion 2A having a ground-contact surface 2a and having conductivity, and a second portion 2B placed on the inner circumferential portion 3 side so as to be in contact with the first portion 2A. The ground-contact surface 2a is a surface that comes into contact with a road surface (ground) during running of a vehicle.

The second portion 2B, the spoke portion 4, and the inner circumferential portion 3 are formed from a resin or elastomer (hereinafter, sometimes referred to simply as "resin or the like") 8, and the resin or the like 8 contains an antistatic agent. The antistatic agent is a polymer-based antistatic agent or surfactant-based antistatic agent. The antistatic agent is blended in an amount of 0.5% by mass or more per 100% by mass of a base component of the resin or the like 8. Such a tire 1 can release static electricity of the vehicle from an axle of the vehicle through the wheel 5, the inner circumferential portion 3, the spoke portion 4, the second portion 2B, and the first portion 2A to a road surface. In order to enhance the function of eliminating static electricity, the antistatic agent is blended in an amount of preferably 2% by mass or more and more preferably 5% by mass or more per 100% by mass of the base component of the resin or the like 8.

The antistatic agent is blended in an amount of 20% by mass or less per 100% by mass of the base component of the resin or the like 8. Accordingly, a decrease in the physical properties of the base component of the resin or the like 8 due to the blending of the antistatic agent is suppressed, and high-speed durability can be maintained high. In order to maintain high-speed durability to be high, the antistatic agent is preferably blended in an amount of 15% by mass or less and more preferably 8% by mass or less per 100% by mass of the base component of the resin or the like 8. In the case where the antistatic agent is a polymer-based antistatic agent, bleed-out of the antistatic agent onto the surfaces of members is suppressed, and the antistatic effect is continued over a long period of time. In addition, the adhesiveness between each member is enhanced by suppressing bleed-out onto the surfaces of the members. Furthermore, with a white or colorless transparent polymer-based antistatic agent, the spoke portion 4 and the inner circumferential portion 3 can be made to have a desired color other than black by adding a pigment or the like.

In the present embodiment, the first portion 2A is an annular rubber member. The first portion 2A is formed from a vulcanized rubber, for example. The ground-contact surface 2a is formed on the outer circumferential surface in the tire radial direction of the first portion 2A. Various drainage grooves (not shown) may be formed on the ground-contact surface 2a.

In a preferable mode, a reinforcing cord layer 2c (shown in FIG. 3) is placed inside the first portion 2A. The reinforcing cord layer 2c is composed of, for example, a layer in which a plurality of organic fiber cords or steel cords are orientated in a predetermined direction. Such a reinforcing cord layer 2c serves to increase the stiffness in the tire circumferential direction and/or the tire axial direction of the first portion 2A and improve steering stability. In addition, a resin material may be added or composited to a part of the first portion 2A.

The second portion 2B is formed, for example, in an annular shape. In the present embodiment, the second portion 2B is joined to an inner circumferential surface 2b in the tire radial direction of the first portion 2A.

The wheel 5 is fixed to the axle (not shown) of the vehicle. The wheel 5 of the present embodiment is made of a metal. As the metal, an iron-based metal, a magnesium-based metal, and a titanium-based metal are preferable, and an aluminum-based metal is particularly preferable. The wheel 5 integrally includes, for example, a disc portion 5a and a cylindrical portion 5b formed outward of the disc portion 5a in the tire radial direction. The disc portion 5a is placed concentrically with the tread portion 2. For example, a center bore 5c, mounting holes 5d, etc., are formed in the disc portion 5a. Static electricity of the vehicle can flow to the axle of the vehicle.

The spoke portion 4 includes, for example, a plurality of elements 4a arranged in the tire circumferential direction. Each element 4a extends in the tire radial direction, and connects the second portion 2B and the inner circumferential portion 3 to each other. Each element 4a can, for example, alleviate the impact inputted to the tread portion 2, by bending during running. The shape, etc., of each element 4a are not limited to those shown, and various modes, such as an element extending in a zigzag manner in the tire radial direction or circumferential direction and an element extending in a mesh-like pattern in a cross-section in the tire circumferential direction, are adopted.

The inner circumferential portion 3 is, for example, joined to an outer circumferential surface (more specifically, the outer circumferential surface of the cylindrical portion 5b) 5e of the wheel 5 (shown in FIG. 3). The inner circumferential portion 3 is adjacent to the cylindrical portion 5b of the wheel 5 on the outer side in the tire radial direction.

As the surfactant-based antistatic agent, for example, nonionic, anionic, and cationic surfactants, polyethylene glycol compounds, etc., are suitable. As the surfactant-based antistatic agent, specifically, trade name "CHEMISTAT (registered trademark)", trade name "SANSTAT (registered trademark)", trade name "PEG", manufactured by Sanyo Chemical Industries, Ltd., etc., are suitable.

The polymer-based antistatic agent preferably contains a thermoplastic resin-based antistatic agent. Even if such a polymer-based antistatic agent bleeds out onto the surface, the polymer-based antistatic agent becomes entangled with the resin or the like 8, and thus is inhibited from being removed by wiping of the surface, etc. Therefore, the polymer-based antistatic agent containing a thermoplastic resin-based antistatic agent can continue its antistatic function for a long period of time. In addition, it is also inferred that, as with the resin or the like 8, such a polymer-based antistatic agent can be recycled by disassembling and pelletizing. As the polymer-based antistatic agent, for example, polymers composed of polyethylene oxide (PEO) chains, polyether-based polymers, etc., are suitable. As the polymer-based antistatic agent, specifically, trade name "PELESTAT (registered trademark)" and trade name "PELECTRON (registered trademark)" manufactured by Sanyo Chemical Industries, Ltd., etc., are suitable.

The resin or the like 8 for the spoke portion 4, the second portion 2B, and the inner circumferential portion 3 preferably has, for example, strength capable of sufficiently exerting load bearing capacity. Accordingly, the impact inputted to the tread portion 2 is alleviated. The resin or the like 8 of the present embodiment is composed of a thermoplastic resin or thermoplastic elastomer. As the thermoplastic resin and the thermoplastic elastomer, for example, polyamide or polyurethane-based resin and elastomer are preferably used, and polyester-based resin and elastomer are particularly preferable. The resin and the elastomer are composed of polymer compounds, and the elastomer is a generic term for elastic polymers.

A complex elastic modulus E* at 30°C of the resin or the like 8 is preferably not less than 30 MPa and further preferably not less than 50 MPa, and is preferably not greater than 350 MPa and further preferably not greater than 300 MPa. Since the complex elastic modulus E* is not less than 30 MPa, the stiffness of the tire 1 is ensured, and the high-speed durability of the tire 1 is maintained. Since the complex elastic modulus E* is not greater than 350 MPa, the impact inputted to the tread portion 2 can be alleviated. In the present specification, the complex elastic modulus E* is a value measured using a viscoelasticity spectrometer under the following conditions in accordance with JISK6394 "Rubber, vulcanized or thermoplastic -Determination of dynamic properties- General guidance".
Initial strain: 5%
Amplitude: ±1
Frequency: 10 Hz
Deformation mode: tensile
Viscoelasticity spectrometer: "EPLEXOR (registered trademark)" manufactured by NETZSCH-Gerätebau GmbH

The volume resistivity of the resin or the like 8 is preferably not greater than 1.0×10¹⁰ Ω•cm and further preferably not greater than 1.0×10⁶ Ω•cm. Since the volume resistivity of the resin or the like 8 is not greater than 1.0×10¹⁰ Ω•cm, a sufficient antistatic function is exhibited, the bleed-out of the antistatic agent is suppressed, and the change in physical properties is maintained small. The volume resistivity is measured under the condition of a temperature of 23°C in accordance with the Guarded-electrode system specified in JIS K6271. The volume resistivity is represented by a volume resistivity measured using a sheet (thickness = 2 mm) obtained from the resin or the like 8 for forming the spoke portion 4.

Next, a method for producing such a tire 1 will be described. In the method for producing the tire 1 of the present embodiment, the first portion 2A, the second portion 2B, the spoke portion 4, the inner circumferential portion 3, and the wheel 5 are each prepared by a known method. Then, these members are placed in an integral molding mold having a known structure (not shown), and are each adhered with an adhesive, thereby obtaining the tire 1 that is integrally molded. The adhesive and the method for using the adhesive are known adhesives and methods. As the adhesive, for example, trade name "CHEMLOCK" manufactured by Lord Corporation is suitably used. In the case of a polymer-based antistatic agent, bleed-out is suppressed, so that the adhesiveness of such an adhesive is maintained high.

As the method for producing the tire 1, the following embodiment may be employed. In the method for producing the tire 1, the first portion 2A, the spoke portion 4, and the wheel 5 are each prepared by a known method. Then, an adhesive is applied to a surface of each member to be adhered, and these members are placed in an integral molding mold having a known structure (not shown). Next, the resin or the like 8 for forming the inner circumferential portion 3 and the second portion 2B is injected from an injection molding machine having a known structure into the integral molding mold. Accordingly, the tire 1 that is integrally molded is obtained.

In such a production method, the tensile shear strength between the tread portion 2 and the spoke portion 4 and the tensile shear strength between the spoke portion 4 and the inner circumferential portion 3 are each preferably not less than 1.0 MPa in an atmosphere of 20 to 25°C. By specifying such tensile shear strength, high-speed durability is maintained high. The tensile shear strength is measured using a tensile testing machine (trade name: AUTO COM universal testing machine AC-10kN-C, manufactured by T.S.E. Co., Ltd.) in accordance with the tensile lap-shear strength of adhesives in JIS K6850: 1999. The measurement conditions are as follows
Distance between chucks: 111.5 mm
Test speed: 50 mm/min

The tensile shear strength between the wheel 5 and the inner circumferential portion 3 is preferably not less than 1.0 MPa in an atmosphere of 20 to 25°C. Accordingly, the above-described effects are effectively exhibited.

Although the particularly preferred embodiment of the present invention has been described in detail above, the present invention is not limited to the above-described embodiment, and various modifications can be made to practice the present invention.

### EXAMPLES

Airless tires having the basic structure shown in FIG. 1 were produced as test tires on the basis of specifications in Table 1, and were each tested for conductivity and high-speed durability. The common specifications are as follows.
Test tire: equivalent to 145/70R12
Material of first portion: natural rubber + styrene butadiene rubber + steel cord
Material of second portion, spoke portion, and inner circumferential portion: polyester-based thermoplastic resin
Material of wheel: aluminum alloy
Ketjen black: trade name "Ketjen Black" manufactured by Lion Corporation

### <Conductivity>

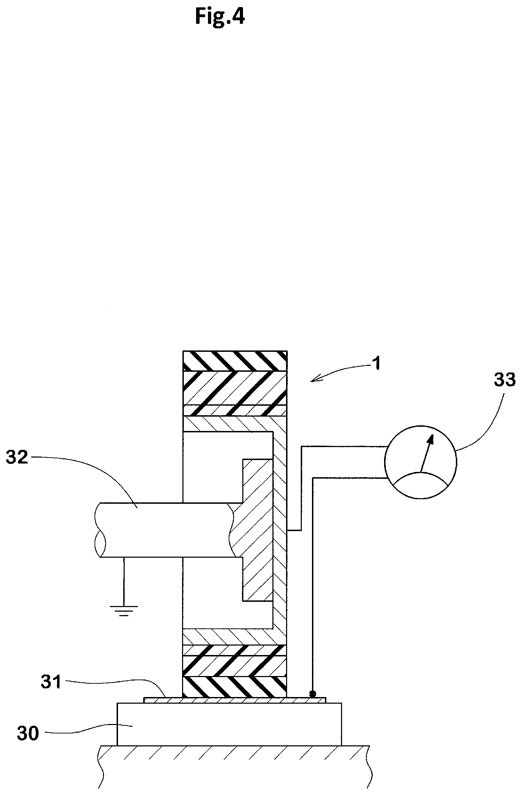

The electrical resistance value of an assembly of the tire 1 was measured in accordance with the JATMA standards using a measurement device as shown in FIG. 4. The measurement device includes a metal plate 31 (having an electrical resistance value of 10 Ω or lower) installed on an insulating plate 30 (having an electrical resistance value of 10¹² Ω or higher) and having a polished surface, a conductive tire mounting shaft 32 for holding the tire 1, and an electrical resistance measuring instrument 33. As each test tire 1, a tire from which a mold release agent and stains on the surface thereof had been sufficiently removed in advance and which had been sufficiently dried, was used. Then, the electrical resistance value between the tire mounting shaft 32 and the metal plate 31 was measured by the electrical resistance measuring instrument 33. The other conditions were as follows. As for the results, a tire 1 having an electrical resistance value less than 100 MQ is acceptable.
Load: 1 kN
Test environment (indoor) temperature and humidity: 25°C/50%
Test voltage (applied voltage): 1000 V

### <Durability>

Using a known drum tester, each test tire was caused to run under the following conditions. For the results, a speed obtained by subtracting 10 km/h from the speed at which damage occurred is adopted, and the results are indicated as indexes with the speed of Comparative Example 1 being regarded as 100. The higher the value is, the better the result is.

Speed: The initial speed was 100 km/h and was increased by 10 km/h every 10 minutes.
Load: 1 kN

The results are shown in Table 1. The "blending amount" described in Table 1 is the ratio of the antistatic agent to 100% by mass of the base component of the resin or the elastomer (% by mass).

**[Table 1]**

| | Comparative Example 1 | Comparative Example 2 | Example 1 | Example 2 |
|---|---|---|---|---|
| Blending amount of ketjen black | - | 30 | - | - |
| Blending amount of PELECTRON | - | - | 1 | 20 |
| Blending amount of surfactant | - | - | - | - |
| Conductivity [MΩ: less than 100 is acceptable] | 400 | 2 | 80 | 10 |
| High-speed durability [Score: higher value is better] | 100 | 83 | 100 | 100 |

As a result of the tests, it is understood that the tire of each Example maintains high-speed durability while having a function of eliminating static electricity of a vehicle, as compared to that of each Comparative Example.

## Claims

1. An airless tire (1) comprising: an annular tread portion (2) which comes into contact with a road surface; an annular inner circumferential portion (3) which is disposed inward of the tread portion (2) in a tire radial direction and comes into contact with a wheel (5) having conductivity; and a spoke portion (4) which connects the tread portion (2) and the inner circumferential portion (3), wherein
the tread portion (2) includes a first portion (2A) having a ground-contact surface and having conductivity, and a second portion (2B) placed on the inner circumferential portion (3) side so as to be in contact with the first portion (2A),
the second portion (2B), the spoke portion (4), and the inner circumferential portion (3) are formed from a resin or elastomer,
the resin or elastomer contains an antistatic agent, and
the antistatic agent is blended in an amount of 0.5 to 20% by mass per 100% by mass of a base component of the resin or elastomer,
**characterized in that** the antistatic agent is a polymer-based antistatic agent or surfactant-based antistatic agent.

2. The airless tire (1) according to claim 1, wherein the polymer-based antistatic agent contains a thermoplastic resin-based antistatic agent.

3. The airless tire (1) according to claim 1 or 2, wherein the resin or elastomer is a thermoplastic resin or thermoplastic elastomer.

4. The airless tire (1) according to one of claims 1 to 3, wherein the resin or elastomer has a complex elastic modulus E* at 30°C of 30 to 350 MPa, wherein the complex elastic modulus E* at 30°C is a value measured using a viscoelasticity spectrometer in accordance with JISK6394 under the following conditions: initial strain: 5%, amplitude: ±1, frequency: 10 Hz, deformation mode: tensile.

5. The airless tire (1) according to one of claims 1 to 4, wherein the resin or elastomer has a volume resistivity of 1.0×10⁶ to 1.0×10¹⁰ Ω•cm, wherein the volume resistivity is measured at 23°C in accordance with the Guarded-electrode system specified in JIS K6271, using a sheet having a thickness of 2 mm obtained from the resin or elastomer.

6. The airless tire (1) according to one of claims 1 to 5, wherein a tensile shear strength between the tread portion (2) and the spoke portion (4) and a tensile shear strength between the spoke portion (4) and the inner circumferential portion (3) are each not less than 1.0 MPa in an atmosphere of 20 to 25°C, wherein the tensile shear strength is measured using a tensile testing machine in accordance with the tensile lap-shear strength of adhesives in JIS K6850: 1999, wherein the measurement conditions are: distance between chucks: 111.5 mm, test speed: 50 mm/min.

7. The airless tire (1) according to one of claims 1 to 6, wherein a tensile shear strength between the wheel (5) and the inner circumferential portion (3) is not less than 1.0 MPa in an atmosphere of 20 to 25°C, wherein the tensile shear strength is measured using a tensile testing machine in accordance with the tensile lap-shear strength of adhesives in JIS K6850: 1999, wherein the measurement conditions are: distance between chucks: 111.5 mm, test speed: 50 mm/min.

## Patentansprüche

1. Luftloser Reifen (1), umfassend: einen ringförmigen Laufstreifenabschnitt (2), der mit einer Straßenoberfläche in Kontakt kommt; einen ringförmigen, inneren Umfangsabschnitt (3), der innerhalb des Laufstreifenabschnitts (2) in einer Reifenradialrichtung angeordnet ist und mit einem Rad (5) in Kontakt kommt, das Leitfähigkeit aufweist; und einen Speichenabschnitt (4), der den Laufstreifenabschnitt (2) und den inneren Umfangsabschnitt (3) verbindet, wobei
der Laufstreifenabschnitt (2) einen ersten Abschnitt (2A), der eine Bodenkontakt-Oberfläche aufweist und Leitfähigkeit aufweist, und einen zweiten Abschnitt (2B) umfasst, der auf der Seite des inneren Umfangsabschnitts (3) so platziert ist, dass er mit dem ersten Abschnitt (2A) in Kontakt steht,
der zweite Abschnitt (2B), der Speichenabschnitt (4) und der innere Umfangsabschnitt (3) mit einem Harz oder Elastomer gebildet sind,
das Harz oder Elastomer ein Antistatikum enthält, und
das Antistatikum in einer Menge von 0,5 bis 20 Massen-% pro 100 Massen-% eines Basisbestandteils des Harzes oder Elastomers beigemengt ist,
**dadurch gekennzeichnet, dass** das Antistatikum ein Polymerbasiertes Antistatikum oder ein Tensid-basiertes Antistatikum ist.

2. Luftreifen (1) nach Anspruch 1, wobei das Polymer-basierte Antistatikum ein auf thermoplastischem Harz basiertes Antistatikum enthält.

3. Luftreifen (1) nach Anspruch 1 oder 2, wobei das Harz oder Elastomer ein thermoplastisches Harz oder thermoplastisches Elastomer ist.

4. Luftloser Reifen (1) nach einem der Ansprüche 1 bis 3, wobei das Harz oder Elastomer einen komplexen Elastizitätsmodul E* bei 30°C von 30 bis 350 MPa aufweist, wobei der komplexe Elastizitätsmodul E* bei 30°C ein Wert ist, der unter Verwendung eines Viskoelastizitätsspektrometers gemäß JISK6394 unter den folgenden Bedingungen gemessen ist: anfängliche Dehnung: 5%, Amplitude: ±1, Frequenz: 10 Hz, Verformungsmodus: Zug.

5. Luftloser Reifen (1) nach einem der Ansprüche 1 bis 4, wobei das Harz oder Elastomer einen Volumenwiderstand von 1,0×10⁶ bis 1,0×10¹⁰ Ω·cm aufweist, wobei der Volumenwiderstand bei 23°C gemäß dem in JIS K6271 angegebenen geschützten Elektrodensystem unter Verwendung einer aus dem Harz oder Elastomer erhaltenen Folie gemessen ist, die eine Dicke von 2 mm aufweist.

6. Luftloser Reifen (1) nach einem der Ansprüche 1 bis 5, wobei eine Zugscherfestigkeit zwischen dem Laufstreifenabschnitt (2) und dem Speichenabschnitt (4) und eine Zugscherfestigkeit zwischen dem Speichenabschnitt (4) und dem inneren Umfangsabschnitt (3) jeweils nicht weniger als 1,0 MPa in einer Atmosphäre von 20 bis 25°C betragen, wobei die Zugscherfestigkeit unter Verwendung einer Zugprüfmaschine gemäß der Zug-Überlappungsscherfestigkeit von Klebstoffen in JIS K6850: 1999 gemessen ist, wobei die Messbedingungen sind: Abstand zwischen Spannvorrichtungen: 111,5 mm, Prüfgeschwindigkeit: 50 mm/min.

7. Luftloser Reifen (1) nach einem der Ansprüche 1 bis 6, wobei eine Zugscherfestigkeit zwischen dem Rad (5) und dem inneren Umfangsabschnitt (3) nicht weniger als 1,0 MPa in einer Atmosphäre von 20 bis 25°C beträgt, wobei die Zugscherfestigkeit unter Verwendung einer Zugprüfmaschine gemäß der Zug-Überlappungsscherfestigkeit von Klebstoffen in JIS K6850: 1999 gemessen ist, wobei die Messbedingungen sind: Abstand zwischen Spannvorrichtungen: 111,5 mm, Prüfgeschwindigkeit: 50 mm/min.

## Revendications

1. Pneu sans air (1) comprenant une portion de bande de roulement annulaire (2) qui entre en contact avec une surface de route ; une portion circonférentielle interne annulaire (3) qui est disposée à l'intérieur de la portion de bande de roulement (2) dans une direction radiale de pneu et entre en contact avec une roue (5) ayant une conductivité ; et une portion de rayon (4) qui relie la portion de bande de roulement (2) et la portion circonférentielle interne (3), dans lequel
la portion de bande de roulement (2) comprend une première portion (2A) ayant une surface de contact de sol et ayant une conductivité et une seconde portion (2B) placée sur le côté de la portion circonférentielle interne (3) de manière à être en contact avec la première portion (2A),
la seconde portion (2B), la portion de rayon (4) et la portion circonférentielle interne (3) sont formées d'une résine ou d'un élastomère,
la résine ou l'élastomère contient un agent anti-statique, et
l'agent anti-statique est mélangé en une quantité de 0,5 à 20 % en masse par 100 % en masse d'un composant de base de la résine ou de l'élastomère,
**caractérisé en ce que** l'agent anti-statique est un agent antistatique à base de polymère ou un agent anti-statique à base de tensioactif.

2. Pneu sans air (1) selon la revendication 1, dans lequel l'agent anti-statique à base de polymère contient un agent anti-statique à base de résine thermoplastique.

3. Pneu sans air (1) selon la revendication 1 ou 2, dans lequel la résine ou l'élastomère est une résine thermoplastique ou un élastomère thermoplastique.

4. Pneu sans air (1) selon l'une quelconque des revendications 1 à 3, dans lequel la résine ou l'élastomère a un module élastique complexe E* à 30 °C de 30 à 350 MPa, le module élastique complexe E* à 30 °C étant une valeur mesurée en utilisant un spectromètre de viscoélasticité selon la norme JISK6394 dans les conditions suivantes : contrainte initiale : 5 %, amplitude : 1, fréquence : 10 Hz, mode de déformation : traction.

5. Pneu sans air (1) selon l'une quelconque des revendications 1 à 4, dans lequel la résine ou l'élastomère a une résistivité en volume de 1,0×10⁶ à 1,0×10¹⁰ Ω•cm, la résistivité en volume étant mesurée à 23 °C selon le système d'électrode protégée spécifié dans la norme JIS K6271, en utilisant une feuille ayant une épaisseur de 2 mm obtenue de la résine ou de l'élastomère.

6. Pneumatique sans air (1) selon l'une quelconque des revendications 1 à 5, dans lequel une force de cisaillement de traction entre la portion de bande de roulement (2) et la portion de rayon (4) et une force de cisaillement de traction entre la portion de rayon (4) et la portion circonférentielle interne (3) sont chacune de pas moins de 1,0 MPa dans une atmosphère de 20 à 25 °C, la force de cisaillement de traction étant mesurée en utilisant une machine de test de traction avec la force de ciseau de genou d'adhésifs dans la norme JIS K6850 : 1999, les conditions de mesure étant : distance entre mandrins : 111,5 mm, vitesse de test : 50 mm/minute.

7. Pneu sans air (1) selon l'une quelconque des revendications 1 à 6, dans lequel une force de cisaillement de traction entre la roue (5) et la portion circonférentielle interne (3) est de pas moins de 1,0 MPa dans une atmosphère de 20 à 25 °C, la force de cisaillement de traction étant mesurée en utilisant une machine de test de traction selon la force de résistance de genou d'adhésifs dans la norme JIS K6850 : 1999, les conditions de mesure étant : distance entre mandrins 111,5 mm et vitesse de test : 50 mm/minute.
